Europäisches Patentamt

European Patent Office

Office européen des brevets

(19)

(11) **EP 0 734 557 B1**

(12) **EUROPEAN PATENT SPECIFICATION**

(45) Date of publication and mention
of the grant of the patent:
**30.01.2002 Bulletin 2002/05**

(51) Int Cl.⁷: **G06K 7/14**, G06K 7/10

(21) Application number: **95904052.8**

(22) Date of filing: **17.10.1994**

(86) International application number:
**PCT/US94/11879**

(87) International publication number:
**WO 96/12244 (25.04.1996 Gazette 1996/18)**

(54) **METHOD AND APPARATUS FOR DECODING UNRESOLVED BAR CODE PROFILES**

VERFAHREN UND VORRICHTUNG ZUR DEKODIERUNG VON STRICHCODEPROFILEN

PROCEDE ET APPAREIL POUR DECODER DES PROFILS NON RESOLUS DE CODES A BARRES

(84) Designated Contracting States:
**DE GB**

(43) Date of publication of application:
**02.10.1996 Bulletin 1996/40**

(73) Proprietor: **INTERMEC CORPORATION**
**Everett, WA 98203-9280 (US)**

(72) Inventor: **ACKLEY, H., Sprague**
**Seattle, WA 98103 (US)**

(74) Representative:
**Grünecker, Kinkeldey, Stockmair &**
**Schwanhäusser Anwaltssozietät**
**Maximilianstrasse 58**
**80538 München (DE)**

(56) References cited:
**EP-A- 0 262 924          EP-A- 0 385 783**
**US-A- 4 056 710          US-A- 4 687 942**

**Description**

Technical Field

This invention relates to a method and apparatus for decoding bar codes and, more particularly, to a method and apparatus for decoding unresolved bar code profiles.

Background Art

A bar code reader typically uses a beam of light or imager to read a bar code, which consists of alternating strips ("bars") of differing reflectivities. The scanner then receives and interprets the fluctuations in the returning light that are caused by the bar code. It is known in the prior art to read bar codes by means of a hand-held wand which makes contact with the surface on which the bar code is printed. However, the need to make contact with the surface is frequently inconvenient and sometimes gives uninterpretable readings because the wand is not moved across the bar code with a sufficiently uniform velocity.

An alternative to a hand-held wand is a bar code scanner which does not require physical contact with the bar code which is to be read. While a hand-held wand and a bar code scanner both read bar codes with a beam of light, a bar code scanner typically produces a beam of light which is repetitively scanned across an area to an imager. It may also read a bar code with a charge-coupled device (CCD) scanner, one-dimensional or two-dimensional. In laser scanners, the beam of light can be produced by a laser source, such as a laser diode. If the beam of light from any type of scanner intercepts a bar code (or some other symbology), the modulated light which is reflected by the bar code is returned to sensing circuitry in the bar code scanner for interpretation. A record of the modulated light signal is called a bar code symbol reflectance profile. The strength of the modulated light signal is a function of the reflectances of the bars and spaces in the bar code, and the distance between the scanner and the bar code.

Nearly all scanners incorporate circuitry (the wave shaper) which converts the received signal into a digital pulse train, having a well controlled amplitude. The wave shaper picks a location on the received signal corresponding to a change of reflectance. The modified signal is analyzed on the basis of relative time. That is, the widths of the alternating areas of different reflectivity are measured on the basis of their relative scanning times. This allows the reader to be used with bar codes which have a wide variety of sizes, the important factor being that the relative widths of the elements of the bar codes be preserved. Accordingly, it is preferable that the light beam be scanned across the bar code at a substantially uniform rate in order to ease the task of interpreting the bar code.

For example, EP-A 0 385 783, which represents the basis for the preambles of claims 1 and 13, discloses a bar code reading apparatus including a scanner, and a measuring circuit for measuring a width of each white bar contained in the bar code and a width of each black bar contained therein and for outputting a measurement signal indicative of the width of the each white or black bar. Further, the apparatus includes first, second and third detection circuits. The first detection circuit detects, from the measurement signal, a white bar having a width equal to or greater than a first reference value and outputs a first detection signal indicative of the width of the white bar. The second detection circuit detects, from the measurement signal, a white bar having a width equal to or greater than a second reference value and outputs a second detection signal indicative of the width of the white bar, the second reference being less than the first reference. The third detection circuit detects, from the measurement signal, a black bar having a width equal or greater than a third reference value and outputs a third detection signal indicative of the width of the black bar. A logic circuit receives the first, second and third detection signals and outputs a margin detection signal indicating detection of the margin area on the basis of the first, second and third detection signals.

It is the object of the invention to provide a method and an apparatus that allow a bar code symbol to be read and decoded more reliably and easily.

This object is solved by the method as claimed in independent claim 1 and by the apparatus as claimed in independent claim 13. Preferred embodiments of the invention are subject-matters of dependent claims.

The peaks and valleys in the symbol profile before shaping which is read by a scanner contain information regarding the relative positions and the relative intensity of the reflected light from the bars and spaces which make up the symbol. However, the information is corrupted because of the presence of noise or by a scanner operating beyond a range suitable for proper operation of the wave shaper circuitry. This noise may be especially destructive to the information contained in the narrow bars and spaces. However, the inventor has learned that fortunately the coding used in popular two-width machine readable symbologies contains a significant amount of redundancy, so that resolution of the wide bars and spaces is sufficient to allow the symbols to be decoded. Accordingly, the present invention allows a given bar code symbol to be read at distances significantly beyond the normal range of resolution of a given scanner and allows high-density symbols to be read by scanners not normally able to do so. At the same time, the method of the present invention does not depend upon complex mathematics and does not require knowledge about the scanner.

In one aspect, the invention is an apparatus for decoding a machine readable symbol representing encoded information. The machine readable symbol includes a plurality of relatively spaced two-dimensional geometric shapes, some of the geometric shapes having a greater extent in at least one dimension than the remaining geometric shapes. The apparatus comprises means for receiving light that is reflected from the machine readable symbol and producing a shape signal therefrom, and means for processing the shape signal and producing a signal indicative of the information encoded in the machine readable symbol.

In another aspect, the invention is a method for decoding a machine readable symbol representing encoded information. The machine readable symbol includes a plurality of relatively spaced geometric shapes, some of the geometric shapes having a greater extent in at least one dimension than the remaining geometric shapes. The method comprises the steps of: (a) receiving light that is reflected from the machine readable symbol and producing a shape signal therefrom; and (b) processing the shape signal and producing a signal indicative of the information encoded in the machine readable symbol.

In a further aspect, the invention is an apparatus for decoding a machine readable symbol representing encoded information. The machine readable symbol includes a plurality of relatively spaced two-dimensional geometric shapes, some of the geometric shapes having a greater extent in at least one dimension than the remaining geometric shapes. The apparatus comprises means for receiving light that is reflected from the machine readable symbol and producing an output signal therefrom, means for receiving the output signal and producing large shape signals indicative of at least one of the spacings and the extents of the geometric shapes in the machine readable symbol having the greater extent in at least one dimension than the remaining geometric shapes, and means for processing the large shape signals and producing a signal indicative of the information encoded in the machine readable symbol.

In a still further aspect, the invention is a method for decoding a machine readable symbol representing encoded information. The machine readable symbol includes a plurality of relatively spaced geometric shapes, some of the geometric shapes having a greater extent in at least one dimension than the remaining geometric shapes. The method comprises the steps of: (a) receiving light that is reflected from the machine readable symbol and producing an output signal therefrom; (b) receiving the output signal and producing large shape signals indicative of at least one of the spacings and the extents of the geometric shapes in the machine readable symbol having the greater extent in at least one dimension than the remaining geometric shapes; and (c) processing the large shape signals and producing a signal indicative of the information encoded in the machine readable symbol.

Brief Description of the Drawings

Figure 1 is a perspective diagram of a scanning laser bar code reader of the type embodying the present invention.

Figure 2 is an end-on view of the top end of the scanning laser bar code reader shown in Figure 1.

Figure 3 is a first example of a method according to the present invention for locating the wide elements in a bar code symbol.

Figure 4 is a second example of a method for locating the wide elements in a bar code symbol.

Figure 5 is an example of the profile of a Code 39 symbol taken with a scanner at a distance of 0.14 inch from the symbol.

Figure 6 is an example of a newspaper picture having two bar code symbols.

Figure 7 is a blow-up of a portion of the newspaper picture shown in Figure 6.

Figure 8 is a reproduction of Figure 7, with the lost element groupings of zero, one and two identified.

Figure 9 is a reproduction of Figure 7, with the lost element groupings of three and four identified.

Figure 10 is a reproduction of Figure 7, with the lost element groupings of five and six identified.

Figure 11 is a representation of the bar code symbol shown in Figure 7, where the narrow elements have been added between the wide ones and the characters have been delineated.

Figure 12 is an example of the profile of a Code 39 symbol taken with a scanner at a distance of 0.21 inch from the symbol.

Figure 13 is an example of the profile of a Code 39 symbol taken with a scanner at a distance of 0.31 inch from the symbol.

Figure 14 is an example of the profile of a Code 39 symbol taken with a scanner at a distance of 0.41 inch from the symbol.

Figure 15 is an example of the profile of a Code 39 symbol taken with a scanner at a distance of 0.50 inch from the symbol.

Figure 16 is an example of the profile of a Code 39 symbol taken with a scanner at a distance of 0.69 inch from the symbol.

Figure 17 is an example of the profile of a Code 39 symbol taken with a scanner at a distance of 0.84 inch from the symbol.

Figure 18 is an example of the profile of a Interleaved 2 of 5 symbol taken with a scanner at a distance of 0.21 inch from the symbol.

Figure 19 is an example of the profile of a Interleaved 2 of 5 symbol taken with a scanner at a distance of 0.33 inch from the symbol.

Figure 20 is an example of the profile of a Interleaved 2 of 5 symbol taken with a scanner at a distance of 0.40 inch from the symbol.

Figure 21 is an example of the profile of a Interleaved 2 of 5 symbol taken with a scanner at a distance of 0.51 inch from the symbol.

Figure 22 is an example of the profile of a Interleaved 2 of 5 symbol taken with a scanner at a distance of 0.62 inch from the symbol.

Figure 23 is an example of the profile of a Interleaved 2 of 5 symbol taken with a scanner at a distance of 0.74 inch from the symbol.

Figure 24 is an example of the profile of a Interleaved 2 of 5 symbol taken with a scanner at a distance of 0.81 inch from the symbol.

Figure 25 is an example of the profile of a Interleaved 2 of 5 symbol taken with a scanner at a distance of 0.91 inch from the symbol.

Figure 26 is an example of the profile of a Interleaved 2 of 5 symbol taken with a scanner at a distance of 1.03 inch from the symbol.

Best Modes for Carrying out the Invention

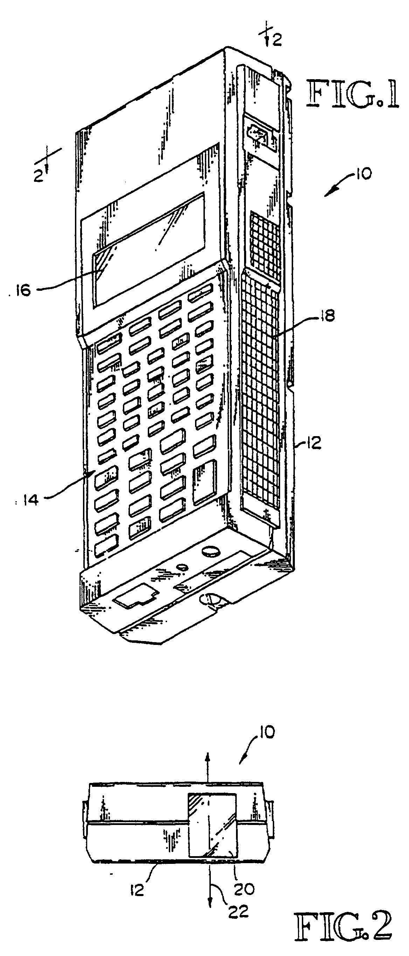

One embodiment of a laser scanner of the type with which the invention circuit is intended to operate is shown in Figures 1 and 2. Figure 1 is a perspective diagram of the laser scanner. Figure 2 is an end-on view of the top end of the laser scanner shown in Figure 1. The laser scanner 10 contains electronic circuitry and optical components contained within a case 12. It includes a keyboard 14 and liquid crystal display (LCD) 16 for the display of bar codes (or other machine readable symbols) which have been read by the laser scanner 10 as well as for programming a microprocessor (not shown) contained within the laser scanner 10. Two popular bar code symbols are Code 39 and Interleaved 2 of 5 (I2/5).

Upon actuating a pair of opposed triggers 18 (one shown in Figure 1), the laser scanner 10 is activated to produce a scanning beam (not shown) of laser light. The scanning beam passes through the window 20 placed in the top end of the laser scanner 10, as shown in Figure 2. The scanning occurs in the plane 22 (shown in Figure 2). The light from the scanning beam is projected forwardly of the laser scanner 20. If it reaches a surface, some of the impinging energy returns to the window 20. If the reflecting surface happens to contain bar code symbology which the scanning laser beam impinges upon, the returning light will be modulated to form a series of peaks and valleys by the pattern of reflectivities which the bar code symbology contains. A record of the modulated light, called a profile, is stored in the reader memory. The light received by the laser scanner 10, if it is reflected from a bar code symbology, can be amplified and processed by circuitry that will be described in greater detail subsequently.

A machine readable symbol is comprised of a number of geometric elements. In the case of some bar code symbols, the elements are parallel bars and the spaces therebetween;, the elements have exactly two different possible widths. The number of elements for any given symbol is a function of the method used to determine the elements, i. e., the method of reading the symbol. One useful method, called "waveshaper," finds an element edge at the point where the reflectance has reached a fixed difference from a peak or valley. The result of its action is similar to that of a conventional electronic waveshaping circuit. A first pass waveshaper decodes all the elements in the profile generated from a Code 39 or I2/5 symbol if the profile is in focus.

Since profiles are retained in a memory of the laser scanner 10 as a string of reflectance level values, they may be analyzed any number of times. A profile that has an incorrect number of elements after analysis with a first pass waveshaper may be re-evaluated with a larger waveshaper reflectance difference. Nonexistent apparent elements caused by defects that are smaller than the second pass waveshaper will then be distinguished from correct elements. A series of increasing waveshaper values can be tried by a waveshaper method until the correct number of elements is reached. Alternately, symbols with poor print quality such as those with ink spread and very low contrast can be evaluated with a waveshaper having a variable level threshold to optimize the decode. Ultimately, an edge finding software program for detecting the edges of the elements in a machine readable symbol can be taught to recognize an arbitrary number of specific symbols that are not decodable by a conventional electronic waveshaping circuit.

Closure bar code profiles are distinguished by a lack of resolved narrow elements that appear in a localized reflectance region and by the existence of resolved wide elements. In closure bar code profiles, the remains of groups of narrow elements form clusters in a horizontal reflectance band in the middle of the profile, between the thresholds for detection. The band is bounded at its upper and lower limits by the reflectance values of single lost narrow elements that are separated by like wide elements. Therefore, the reflectance peaks and valleys of similar wide elements that are separated by a narrow element appear to be adjacent in a closure profile. The reason is that the narrow element between adjacent wide elements has a small reflectance difference relative to the contrast of the wide elements and is, accordingly, not detected.

The wide elements are the only ones which extend near the top and bottom of the profile. Resolved wide elements can be found by a relatively low reflectance value first pass waveshaper. In this case, reflectance values chosen need to be larger than the electrical noise but small enough to detect every peak or valley on the top and bottom of the profile. Unresolved narrow elements will also be found with a small waveshaper values, but they can be easily distinguished by their small element contrast and by the fact that their reflectance values are located in the middle of the profile.

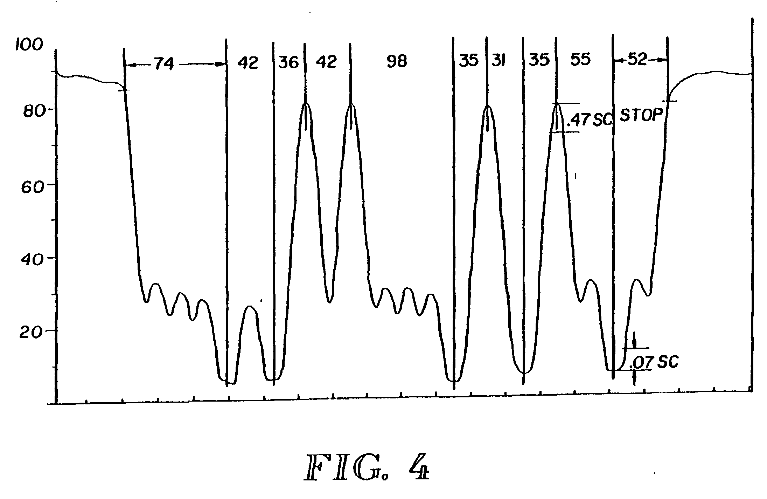

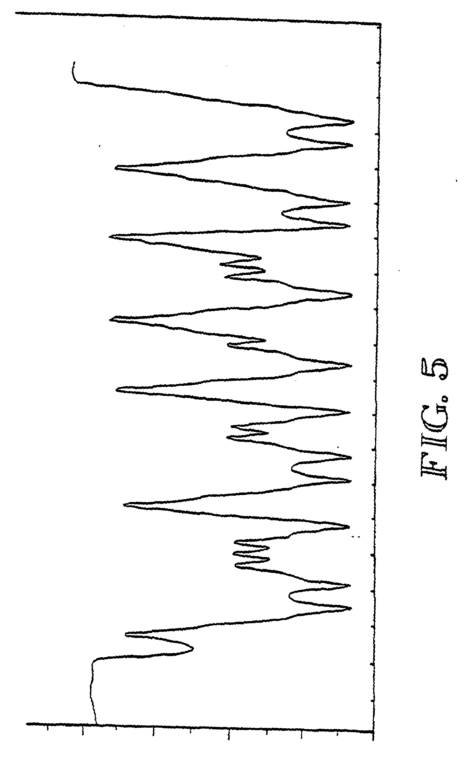

A profile which has been subjected to an analysis of the change in reflectance in one direction (i.e., from high reflectance toward lower reflectance) can be also analyzed from the other direction. A reverse pass of the stored values describing the symbol can serve to bound the resolved wide elements as well as to bound the symbol itself. For instance, the waveshaper values applied from the left and the right specify a wide element peak with a mark a few reflectance points away from the extreme value on each side. The center of the wide element is laterally halfway between the specified points. The decode measurement method counts the lateral distances between the wide element centers, as opposed to typical electronic waveshaper circuits which measure the width of each element. The symbol begins and ends, for the purpose of the decode, at the point where the waveshaper first finds an edge in each of the two directions of analysis, or in other words, at the waveshaper reflectance drop point from the quiet zones. Further clarification of wide element location and lateral measurement counts may be found with the examples from Figures 4 and 5. The value of the first pass waveshaper is an adjustable parameter. A value of 0.07 of the overall symbol contrast (SC) appears to be satisfactory on a variety of closure profiles.

After the wide elements of a symbol are isolated, a goodness test can be performed to make sure that only valid wide elements have been identified. The reflectance values for the wide bars should be very consistent from bar to bar. Specifically, no correct wide bar should vary from the lowest reflectance in the symbol by more than the waveshaper variation. The wide space consistency should be good, also. A reasonably stringent test is that like resolved wide elements fall within 0.07SC of one another.

Once the wide elements of a symbol are located, their position relative to one another and the ends of the symbol profile can be used to orient the symbol and then determine the type of symbology. I2/5 and Code 39 end in the same fashion, with a wide bar and two narrow elements then a quiet zone. In the case of both symbologies, the lateral distance from the quiet zone to the nearest wide bar is smallest for the stop character. For Code 39 and sometimes for I2/5, there are adjacent wide bars at the end of the symbol which are centered in a symmetric wide space pattern (from the last wide space to the quiet zone). In the beginning of the symbol, Code 39 always has adjacent wide spaces (the quiet zone is separated from the first wide space by a single narrow bar). The first Code 39 lateral measurement on the left should be nearly equal to the third lateral measurement which is also from adjacent wide elements. In addition, for fixed length I2/5, the correct number of wide bars is equal to 2N+1 and spaces is equal to 2N for N = 1, 2, 3, ..., 24.

For any given pair of wide elements in Code 39 and I2/5 symbols and any two-width symbologies, including but not limited to, Codabar, MSI, and Plessey, a fixed number of narrow elements (from 0 to 13) may be present. Zero elements are present when a wide space is next to a wide bar and vice versa. In reflectance terms, if a wide bar is directly opposite a wide space, then zero narrow elements are present, and if it is farther separated then the next possible number of included narrow elements is two. One narrow element cannot be present between opposite wide elements, i.e. between a wide bar and a wide space. But if reflectance peaks or valleys are adjacent. (which occurs when wide bars are next to wide bars and when wide spaces are next to wide spaces), then a single narrow element can be present. The next possible number of narrow elements between like wide elements is three. For all spacings between wide elements, in reflectance terms there are always an even number of lost narrow elements between opposite wide elements and an odd number of lost narrow elements between adjacent wide elements.

Code 39 Unit Calculation

The start and stop characters for Code 39 offer a powerful yardstick for determining the lost elements of a symbol. There are three useful start character measurements. The first measurement is the lateral distance from the quiet zone to the center of the wide space. The second measurement is from the center of the wide space to the center of the first wide bar. The third measurement is the center-to-center spacing of the wide bars. The first measurement count and the third count are both distances between adjacent wide elements and consequently will have a similar width. Also the first and third counts each enclose a single narrow element. The second count in the start character is between opposite wide elements and is known to contain two narrow elements and the second measurement is larger than the first and third by a single narrow element width. Therefore the difference in count between the start character measurements provides a single narrow element or unit size comparison.

Similarly, the stop character offers two opposite wide elements which enclose a pair of narrow elements and a single adjacent pair of resolved wide elements. Besides being useful for establishing a unit measurement, the adjacent wide element (AWE) counts can be used to judge acceleration of the scanning beam in order to remove the lateral measured count distortion.

The unit measurement, which is the difference between the first and second lateral measured counts in the Code 39 start character, can be used to construct a lost element finding matrix. A lost element matrix is assembled starting with the second entry, which is based on the measurement of the AWEs in the start/stop pattern. This pattern contains a single narrow element. The other start and stop measured distance, opposite wide elements, is the third entry of the matrix. The rest of the matrix is assembled by adding (or subtracting) the unit value, which is the difference between the second and third matrix values. The unit value represents the width of a lost narrow element. The matrix is detailed below in Table 1.

Table 1

| Element Lost | Measured Distance | Lost Element Parity |
|:---:|:---:|:---:|
| 0 | AWE-unit | E |
| 1 | AWE | O |
| 2 | AWE + unit | E |
| 3 | AWE + 2*unit | O |
| 4 | AWE + 3*unit | E |
| 5 | AWE + 4*unit | O |
| . | . | . |
| . | . | . |
| . | . | . |
| 12 | AWE + 11*unit | E |
| 13 | AWE + 12*unit | O |

Lost Element Matrix Format

In order to determine the number of lost elements, compare the measured count to the matrix table above, and the closest values with the appropriate element parity is the correct number of lost elements.

I2/5 Unit Calculation

For the I2/5 symbology, the stop count can be used to find wide element pairs which do not enclose unresolved narrow element pairs. Since the transition from the stop wide bar to the quiet zone contains exactly one element pair, those distance counts which are materially less than the stop count do not contain any unresolved narrow element pairs. An adjustable parameter can be used to determine the range about the stop count which can be reasonably expected to distinguish counts which are materially less than the stop count. Plus and minus ten percent is apparently a good starting point for the stop decode tolerance, so that those counts that are less than the stop minus ten percent are considered to be free of unresolved element pairs. If a wide space and bar are next to each other, no narrow elements are present, whereas adjacent like wide elements are separated by an unresolved single narrow element.

Using the stop count tolerance of plus or minus ten percent, single element pairs can be located if the count between wide elements is equal to the stop count. A decode can be reached at this point if all the counts adjacent to the stop count are equal to or less than the stop count. If an adjacent wide element count internal to the profile is greater than the stop count, it can be compared to a matrix that is similar to the Code 39 matrix constructed above. A unit measurement can be estimated as the stop distance divided by 3.25 and then reconfirmed by the difference of adjacent and opposite elements found in the profile which are a lesser count than the stop pattern. The stop count represents 3.5 modules in a symbol with N=3 and 3 modules in a symbol with N=2, and the value of 3.25 appears to work well with a variety of closure profiles.

A second goodness test of the correct narrow bar count and the proper reflectance characteristics of the unresolved elements may be advisable. The unresolved narrow element pairs should be in a region between unresolved single elements and usually in a relatively tight reflectance range. Twice the test value used to verify wide elements, 0.14SC, can be used as a window for confirming lost element groups.

A First Code 39 Closure Decode Example

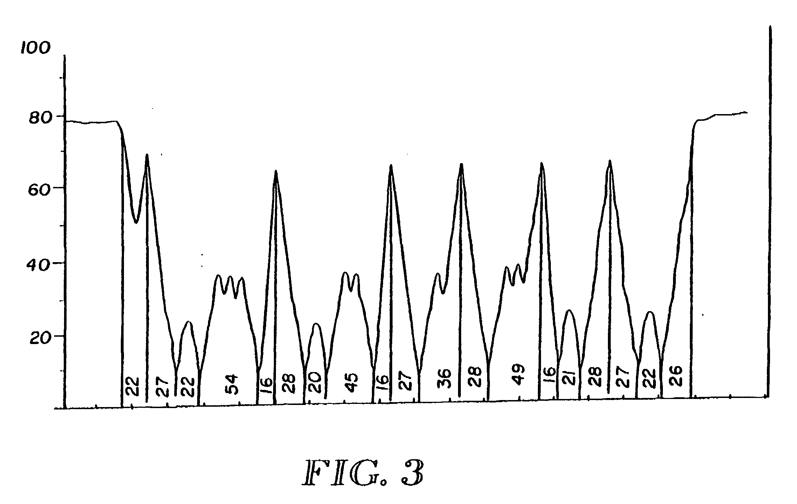

The reflectance profile in Figure 3 was made by reading a good quality 10 mil Code 39 symbol with an unknown number of characters. This Code 39 symbol is viewed at a distance of 0.84 inches, which is 0.24 inches outside of the design limits of the Intermec 1301 fixed position focused aperture scanner used to read the symbol. The 1301 scanner has a depth of field of 0.2 inches. The out-of-resolution features are best demonstrated by the disappearance of the narrow elements and the existence of resolved wide elements which extend to the top or bottom of the profile range. The centers of the resolved wide elements are indicated as well as the distances between resolved wide elements. The difference between the first and second measured distances is a unit dimension which is used to construct a decode matrix.

The wide elements have been identified as those which extend to the top and the bottom of the profile. Those peaks and valleys which do not make it that far and consequently end up in the middle of the profile are not included. The centers of the wide elements are at the high points or low points of the profile but can be calculated more generically as the center of the points which are 0.07SC from each extreme. For Figure 3, SC is about 70 percent, so the first pass software waveshaper method value is about 5 percent. Therefore the center of the wide elements is the point between scribe marks which are 5 percent below or above the element extremes.

The number of characters can be easily determined as the number of wide spaces and or half the number of wide bars after locating any special Code 39 characters which have a closure signature of three adjacent wide spaces. To determine character count, all instances of three adjacent wide spaces are subtracted before the remaining wide bars and spaces are counted. The profile cannot be I2/5, because the number of wide bars is not equal to the number of wide spaces plus one. The start pattern is on the left because the sum of the first two counts is larger than the last count. Also, the first count and the third count are nearly equal and the stop pattern is symmetric about the adjacent wide elements.

The difference between the first two counts (27-22) is 5, which may be used as a unit count. Alternatively, the second count could be subtracted from the average of the first and third count to obtain a unit measurement. The nearly identical spacing of the adjacent wide elements in the start and stop characters, as well as in the first and fourth data characters, indicates that no acceleration is present in the scan.

A lost element matrix can be established using the start/stop measurements and the calculated unit measurement. The first entries are 22 and 27, which are taken directly from the profile counts (lateral distances between wide elements) or may be calculated as an average. The unit value, 5, is subtracted from 22 to get the zero element entry. The remaining values are determined by successively adding 5 to the matrix count resulting in the following table. The lost element parity refers to the number of lost elements. See Table 2.

Table 2

| Lost Elements | Matrix Count | Lost Elt Parity |
|:---:|:---:|:---:|
| 0 | 17 | E |
| 1 | 22 | O |
| 2 | 27 | E |
| 3 | 32 | O |
| 4 | 37 | E |
| 5 | 42 | O |
| 6 | 47 | E |
| 7 | 52 | O |

Lost Element Matrix Example From Figure 3

Now each measurement from Figure 3 can be compared to the matrix value and the appropriate lost element parity can be chosen. For instance, starting on the left, the measurement 54 is closest to the matrix value 52 and since the 54 is an adjacent element count then an odd number of elements must be present (in fact 7 elements in this case). Similarly, the measured distance 45 represents 5 lost elements. The measurement 36 is for opposite elements, so an even number must be present and the table can be consulted to determine that the missing number of elements is 4. Once the lost narrow elements are found the element pattern may be compared to a look-up table for a perfect match before a decode may be passed.

The realization that element count parity must be preserved adds considerably to the tolerance of this procedure to errors in the initial measured counts. The count values can be off by as much as a whole unit in either direction before an error can be made. For instance, the measured distance 54 would have to go up to 58 or down to 46 before a valid parity count that is incorrect is rendered. Even though this property makes the decode adequately robust, further refinement to the unit value can be made once the first several matrix entries are determined.

A Second Code 39 Closure Decode Example

In this example, a method for decoding Code 39 utilizing the center location of wide elements is described. The method does not use the direct counting of narrow elements and is generic for any two width symbology. The method can be used to improve the depth of field performance and useful X-dimension range of video scanners.

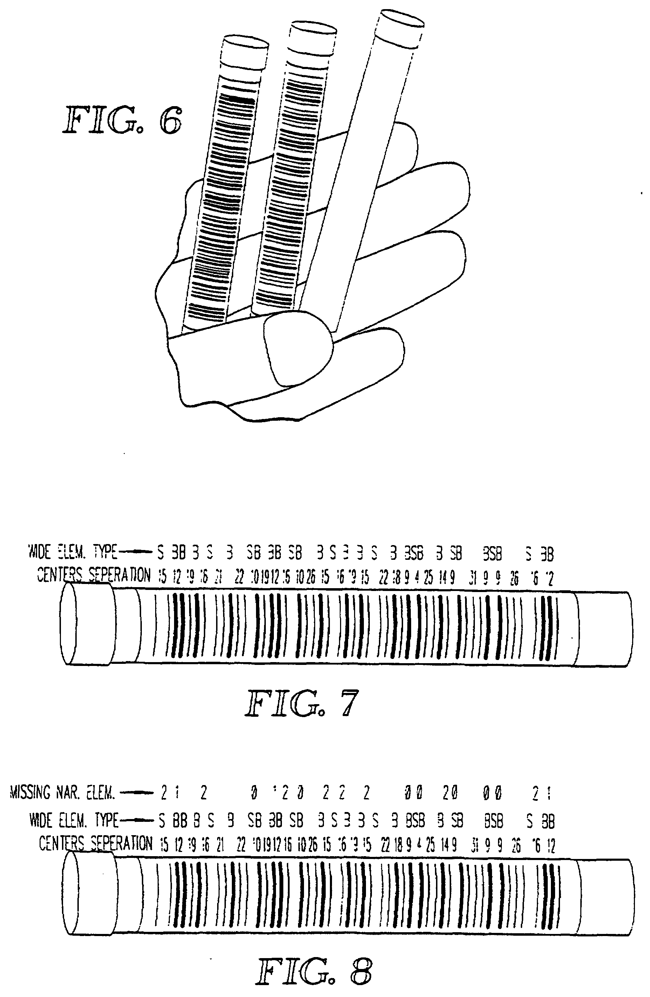

- A video image typically has resolution limited X-dimensions on the order of the pixel size. When the X-dimensions become markedly smaller than the pixel size, convention dictates that the image is not decodable because the edges of the narrow elements cannot be determined. Similar restrictions exist when the aperture size of an optical system is near to or larger than the X-dimension. In this example, the method for decoding single scan path profiles characterized by the disappearance of distinct narrow elements is applied to a Code 39 half tone newspaper image where the narrow elements appear to be a uniform gray. See Figure 6.

As an overview of the decode process, the decode is based on the location of the centers of the wide elements. First the wide elements are located as the only resolved elements and then they are counted. For a Code 39 symbol with alphanumeric data, the number of wide bars should be equal to twice the number of wide spaces. Next, the distances between the wide elements are measured and a matrix of centers distances is created using the start and stop character distances as the first entries of the matrix. The narrow element counts for small centers distances are then identified and the matrix is built by iterating for larger element centers distances until all elements have been identified. A decode is then performed.

The right test tube in Figure 6 has a somewhat clearer image due to the angle of the test tube and can almost be decoded directly by eye. The difficult part of the decode task comes with determining how many narrow elements exist in the gray areas between the distinct wide bars and spaces. A more reliable decode may be made by ignoring the narrow element gray areas and decoding the wide elements centers locations directly. The left test tube is difficult to decode by eye and would otherwise be ignored by an automated decoder which relies solely on the location of element edges for a decode.

The decode of the test tube on the right side of Figure 6 is accomplished by the following eleven step process:

1. Count the wide bars and spaces and verify the parity for Code 39. In this case there are twenty wide bars and ten wide spaces, indicated a legal Code 39 symbol with ten symbol characters.

2. Label the wide elements as either bars (B) or spaces (S) and measure the average distance between them. This is illustrated in Figure 7, which is a blow-up of the test tube on the right hand side of Figure 6, where the wide element types are identified (B or S) and the centers separations are measured.

3. Verify the presence of a Code 39 start and stop character of one wide space and two wide bars. Note the centers distances for the bar-to-space and bar-to-bar transitions and note any acceleration in the scan. An 0 initial matrix entry can be made for lost element counts of both the bar-to-bar spacing and the space-to-bar transition, from the knowledge of the start and stop character construction.

4. Create an interim lost element matrix for one and two lost elements, taken directly from the center location distances of the start and stop characters.
This initial matrix is:

$$\textbf{B-B,1 12} \quad , \quad \textbf{B-S,2 15}$$

where B-B means a wide bar next to another wide bar with no intervening wide spaces. B-S indicates a wide bar next to a wide space or vice versa. The "1" indicates that the particular like wide element pairing is that of two wide bars separated by a single narrow space. The "12" is the centers location distance taken from Figure 7. The "2" indicates differing wide elements separated by a narrow bar and narrow space, or exactly two narrow elements. The centers distance is taken from Figure 7 and is 15.

The difference between the two centers distances, 12 and 15, is the unit or X-dimension and is equal to 3. The B-S distance that contains no narrow elements, i.e. for a wide bar and space next to each other, can be estimated as the B-S distance for two missing elements minus two element X-dimensions or 15-6 = 9. Now the matrix has three entries.

```
                          B-S,0 9
              B-B,1 12  B-S,2 15
```

The next two entries in the matrix can be estimated to bound the identification of lost element sites of zero, one, and two elements by adding two X-dimensions to the lower two matrix values.

```
                       B-S,0 9
           B-B,1 12  B-S,2 15
           B-B,3 18  B-S,4 21
```

Note that when like elements are next to each other there can only be an odd number of missing narrow elements and when unlike wide elements are next to each other, only an even number of narrow elements are present.

5. Identify the missing element locations for zero, one and two narrow elements as centers distances that are nearly the same as the matrix values. For instance, the first distance after the start character is 19, which is too large to be a B-B single lost element. The next is 16, which is very close to the B-S value of 15, indicating two lost elements. Figure 8 shows the bar code with the lost elements zero, one and two identified.

6. Average all the identified zero, one and two element locations and recompute the expected values for three and four lost elements as well as the unit value. Also make an estimate at five and six lost elements for bounding purposes.

Average of 0's = 9 (10, 10, 9, 9, 9, 9, 9)
Average of 1's = 12 (12)
Average of 2's = 15 (16, 16, 15, 16, 15, 14)

Therefore, no adjustment is required to the estimate of the 3's and 4's and the next level of the matrix is constructed to bound the choices for 3's and 4's.

```
                       B-S,0 9
           B-B,1 12  B-S,2 15
           B-B,3 18  B-S,4 21
           B-B,5 24  B-S,6 27
```

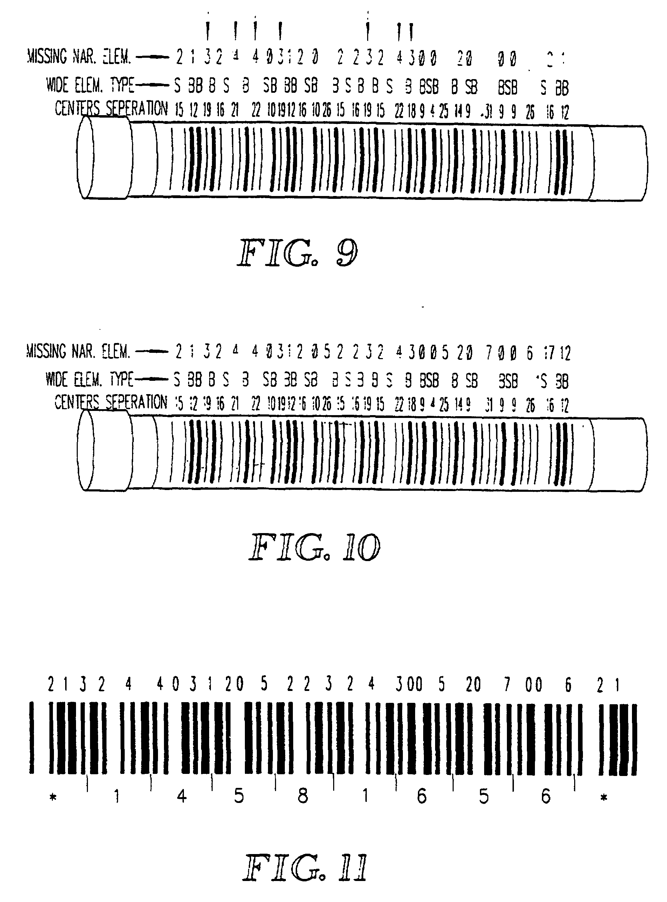

7. Identify missing 3's and 4's and average their centers distances. Figure 9 shows the 3's and 4's identified, with their centers spacings.

Average of 3's = 19 (19, 19, 19, 18)
Average of 4's = 22 (21, 22, 22)

8. Modify the estimate of the next missing narrow elements set. Since the average figures are slightly different from the estimates used to determine them, a better estimate of the 5's and 6's can be made by using the calculated average values for the 3's and 4's and then adding two unit values. Note that the unit value, 3, calculated as the difference of the average 3's and 4's, is still the same.

9. Create the next level of the modified matrix and find the 5's and 6's.

EP 0 734 557 B1

```
                              B-S,0 9
               B-B,1 12   B-S,2  15
               B-B,3 19   B-S,4 22
               B-B,5 25   B-S,6 28
               B-B,7 32   B-S,8 34
```

Note that this matrix contains 3's and 4's which have been adjusted to equal the average values calculated in Step 7. Consequently, the estimates of the higher element counts are slightly greater than the last matrix.

10. Find the 5's and 6's. Figure 10 shows the 5's and 6's identified. Note that the one 7 is obvious, which completes the task of identifying all the lost narrow elements. If center distances greater than 36 had been in the image, the iteration process would continue until all elements are identified.

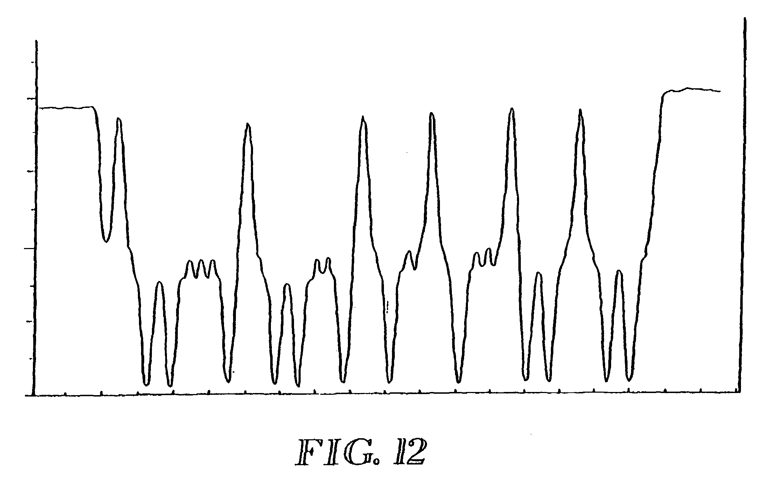

11. Determine the characters and decode the symbol. The easiest way to demonstrate the decode visually is to make a symbol with the missing elements and mark off the characters. Figure 11 is a representation of the pattern where the narrow elements have been added between the wide ones and the characters have been delineated. The decoded data is shown below each character.

The final iteration of the decode matrix constructed using the above procedure is:

```
                              B-S,0 9
               B-B,1 12   B-S,2 15
               B-B,3 18   B-S,4 21
               B-B,5 25   B-S,6 28
               B-B,7 31   B-S,8 34
```

A generic decode process flow chart is given below:

Identify wide elements.

Measure wide element centers distances.

Identify start and stop wide elements.

Compare dimensions of start to stop, to gauge acceleration.

Make first matrix estimate for missing 0's, 1's and 2's.

Identify 0's, 1's and 2's.

Average all 0's, 1's and 2's in the symbol and revise matrix estimate for 3's and 4's if necessary.

Identify 3's and 4's.

Average all 3's and 4's and revise the matrix estimates for 5's and 6's if needed.

Identify 5's and 6's.

Average all 5's and 6's and revise the matrix estimates for 7's and 8's, if necessary.

Identify all 7's and 8's. Decode.

I2/5 Near-Closure Decode Example

The profile in Figure 4 was made on a positive ink spread TTR symbol with a 10 mil X-dimension using a 6 mil aperture in an Intermec 1301 scanner that was placed outside its normal depth of field by 50 percent. The resulting profile is well past the point where conventional circuits can find the elements. This example is used because the correct narrow elements are still visible as the small transitions between 20 and 40 percent reflectance. The ends of the symbol profile in Figure 4 are indicated by small vertical lines. The centers of the resolved elements are also marked. The relative count between each resolved feature is indicated above the profile.

The I2/5 decode method is listed below in abbreviated form. The profile counts from Figure 4 may be used for example.

```
Determine Rmax and Rmin which gives SC.
Run waveshaper 0.07SC
            if correct element count then decode
            if element count too big then run waveshaper
0.14SC
            continue filtering routine
Test for closure

Run reverse waveshaper 0.07SC
            Locate centers of resolved elements
            Insure wide bars are less than Rmin + 0.07SC
            Insure wide spaces are greater than Rmaxspace -
0.07SC

Determine stop as lesser of first and last count

Determine stop tolerance as +/-10% of stop count
            if count is less than stop - tolerance then
                zero element pairs exist
            if count is between stop +/- tolerance, then
                one element pair exists
            Calculate unit as difference of zero, one or two
element counts
Count narrow elements to determine if any remain
Decode if possible

Determine unit as stop count divided by 3.25
            Verify unit measurement calculated above
            Add unit to stop count
            if count is less than stop + unit then
                two narrow bars present
            if count is between stop + unit and stop +
2*unit then
                three narrow bars are present
            Verify lost element count parity
                if wide elements are adjacent then parity
is odd
                if wide elements are opposite then parity
is even
Deduce remaining groups larger than three narrow bars
Decode
```

Other I2/5 Closure Examples

The peak and valley location method has also been used successfully on several profiles made with a focussed 10 mil aperture on a 3.3 mil symbol as well as on theoretical profiles in the same region and vision system profiles of 10 mil X-dimension symbols which were out-of-focus.

Variable Aperture Families

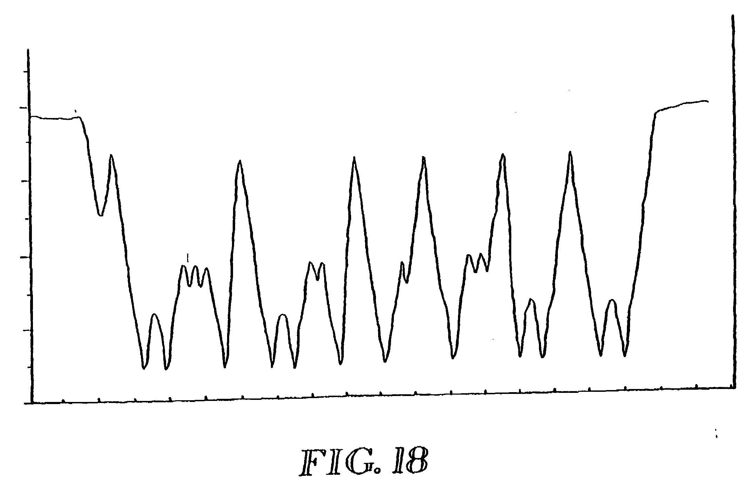

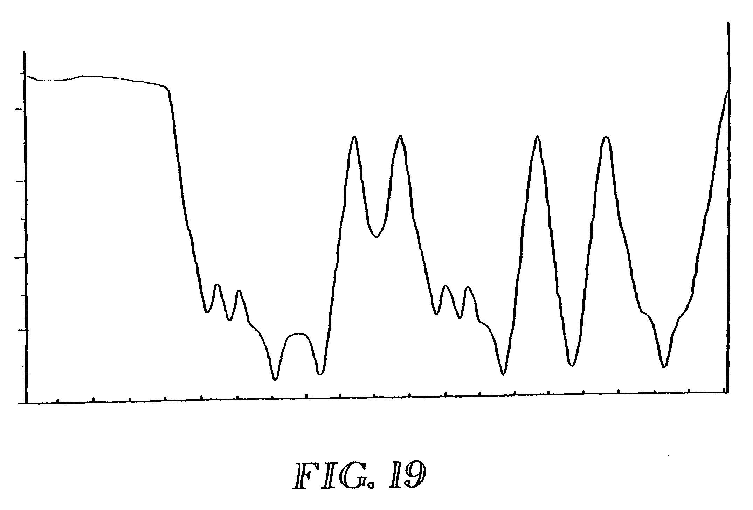

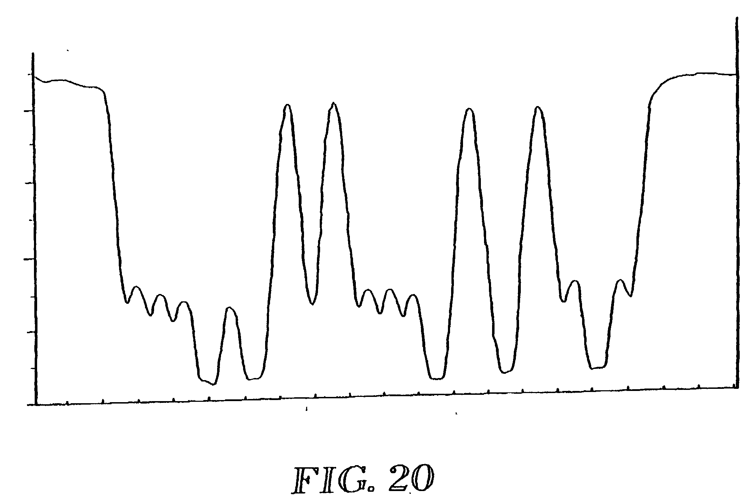

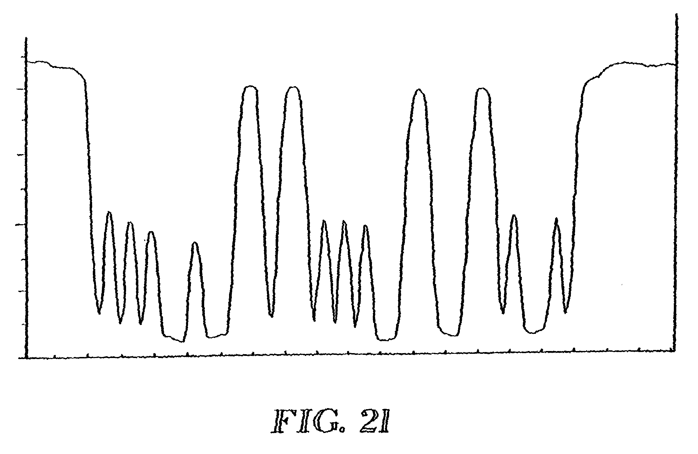

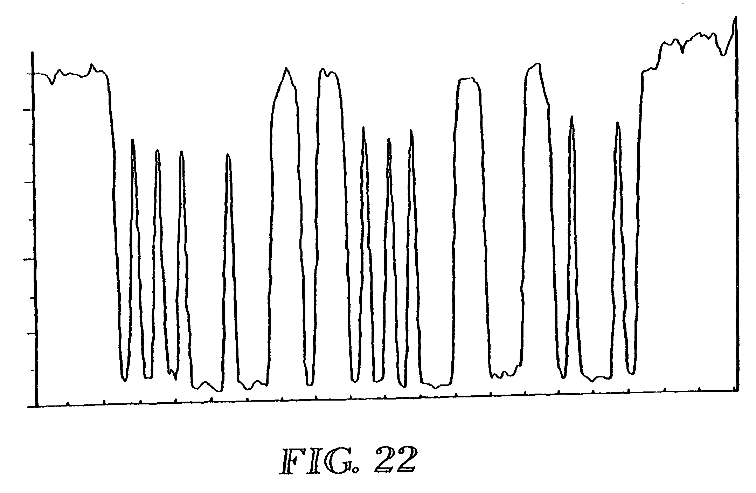

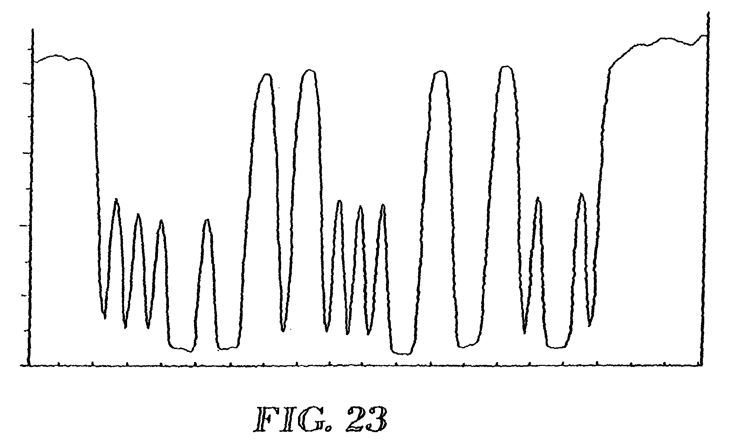

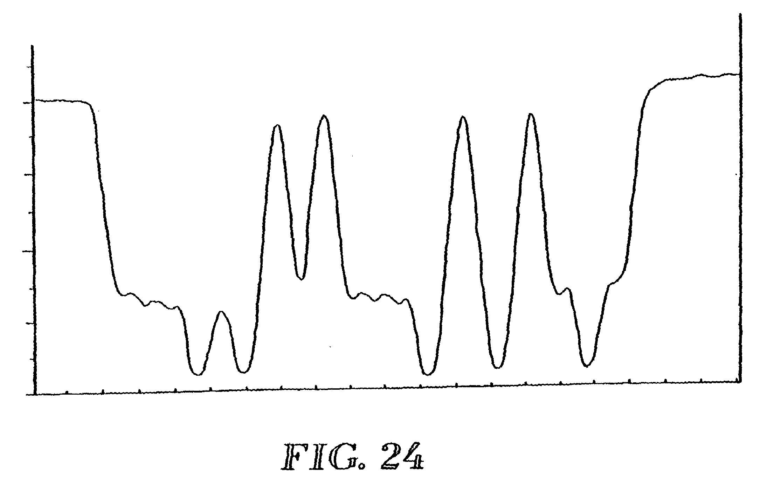

Code 39 profiles with varying resolution distortion are shown in Figures 5-11 and are displayed as a function of the distance from the scanner to the symbol. Note that the location of the wide elements is invariant throughout the closure and resolved regions. An I2/5 profile family is shown in Figures 18-26.

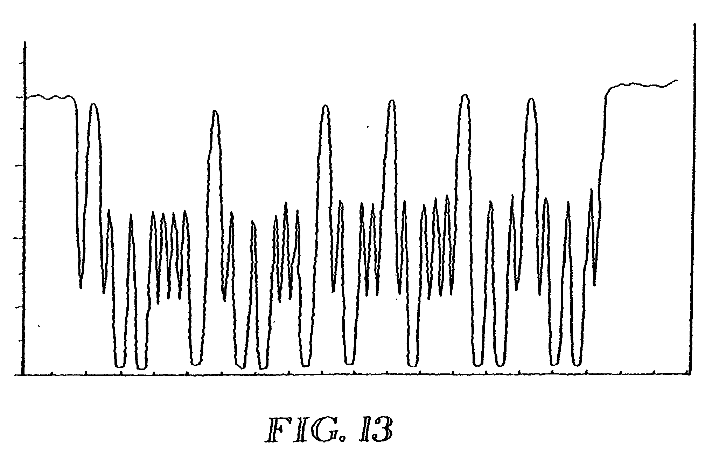

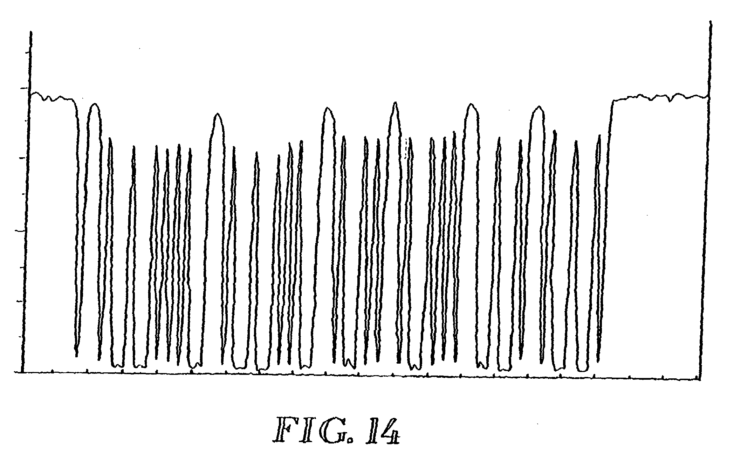

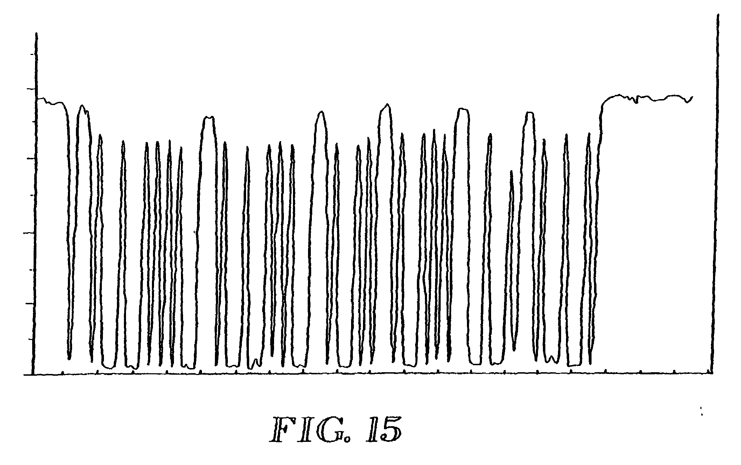

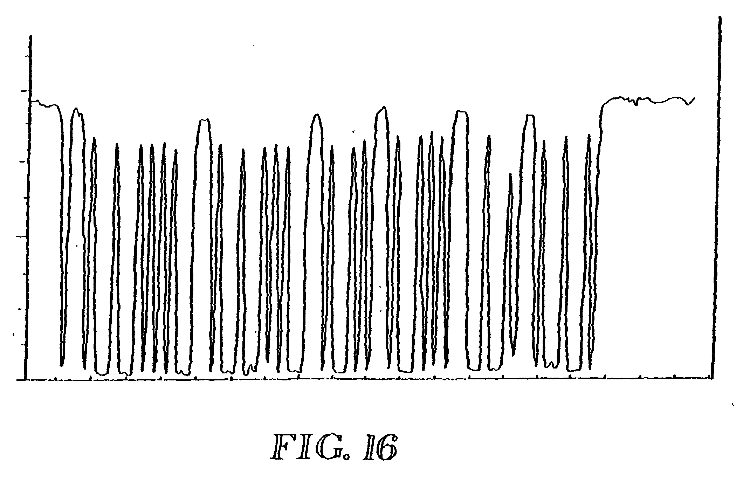

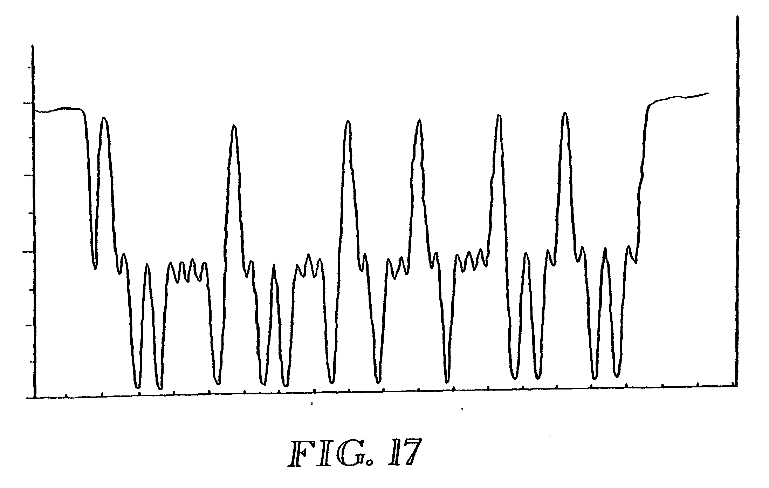

The closure profiles in Figures 5 and 12-26 were made with a fixed aperture in an out-of-focus configuration. The usual operating range for the Intermec 1301 fixed position focused aperture scanner is 0.4 to 0.6 inches from the symbol. The distances in the examples in Figures 5-11 range from .14 to .84 inches and the distances in the examples in Figures 18-26 range from 0.21 to 1.1 inches.

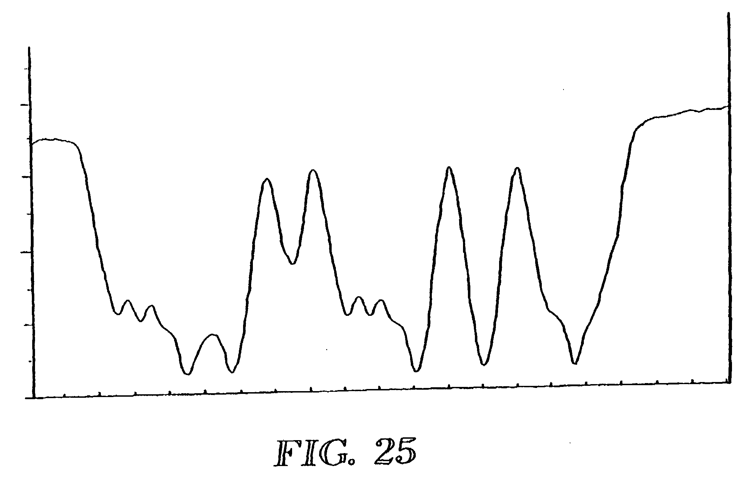

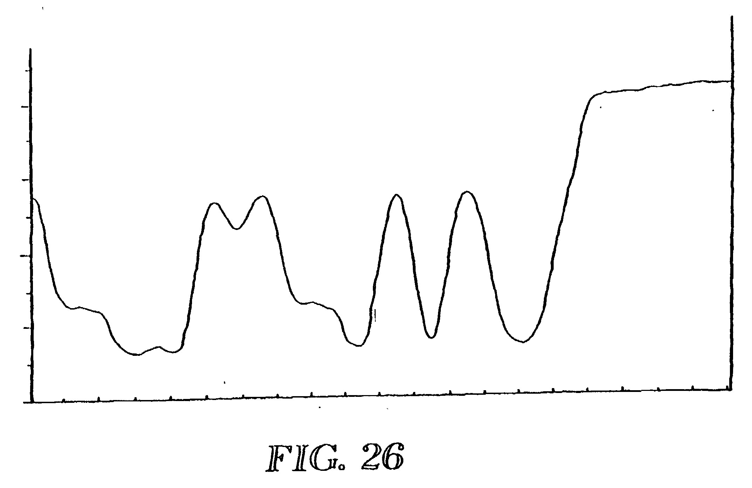

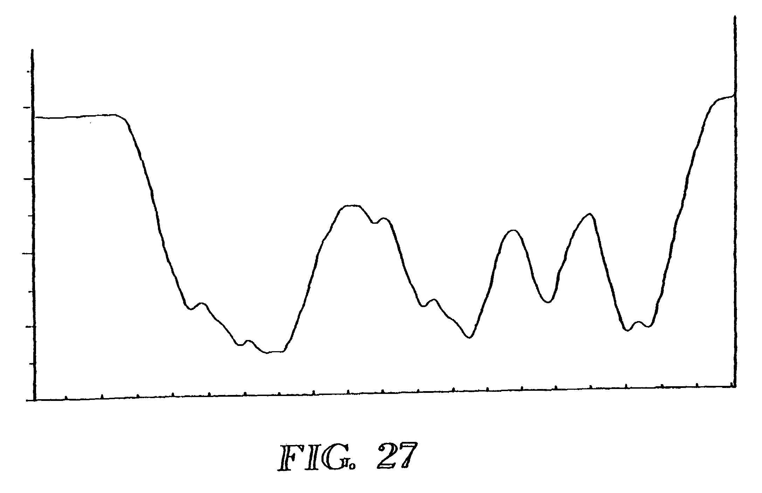

Even though the aperture used to make the profiles shown in Figures 4, 5, and 12-26 is 20 percent larger than the standard aperture of an Intermec 1301 fixed position focused aperture scanner which operates from 0.4 to 0.6 inches, the profiles are easily decoded from 0.2 to 0.8 inches resulting in a depth of field 300 percent greater than the standard Intermec 1301 fixed position focused aperture scanner. It is difficult to make profiles with the scan head closer than 0.1 inches because of lighting limitations but profiles out to 1.1 inches are included. In Figure 25, at 0.91 inches, the wide elements are all visible but may- be difficult to discern in rudimentary software. At 1.03 inches (see Figure 26), the wide bars will no longer pass a goodness test and have essentially moved beyond the closure region.

Conclusions

A robust quantitative decode method is described for any two element width symbology, such as the variable length Code 39 and I 2/5 symbologies, and which both filters out unwanted symbol defects as well as decodes successfully beyond the normal operating range of the scanner. The method is not dependent on inherently noisy slope information, although slope information can be used to augment this method. The method does not rely on complex deconvolution mathematics and does not require knowledge about the scanning configuration. The decoding method is a generic wide element decode process.

The peak and valley location method of decoding is inherently simple and straightforward to implement in a standard software language. The method gives an unambiguous decode of closure profiles. For I2/5, fixed length symbols should be used for the same short scan reasons that limit conventional I2/5 applications. Symbols which contain a symbol check character will exhibit higher data security. Closure decoding is shown to at least triple the usable depth of field achievable with a projected aperture scanning device.

While the detailed description above has been expressed in terms of a specific example, those skilled in the art will appreciate that many other circuits could be used to accomplish the purpose of the disclosed inventive apparatus and many other optical configurations such as laser, CCD imagers, LED and incandescent scanning devices. Accordingly, it can be appreciated that various modifications of the above-described embodiments may be made.

**Claims**

1.  A method for decoding a bar code symbol representing encoded information, the bar code symbol including a plurality of relatively spaced bars having a narrow and a wide width and the spaces between the bars having a narrow and a wide width, comprising:

    receiving light that is reflected from the bar code symbol and producing an output signal therefrom;

    **characterized by**:

    receiving the output signal and producing a wide feature signal resolving the bars and spaces in the bar code symbol having the wide widths, but failing to resolve the bars and spaces having the narrow widths; and

    processing the wide feature signal and producing a signal indicative of the full information encoded in the bar code symbol therefrom based on the centers of the bars and spaces having the wide widths.

**2.** The method of claim 1 wherein the step of processing the wide feature signal includes:

generating a matrix of lost elements in response to the wide feature signal; and

wherein said producing the signal indicative of the full information is based on the matrix of lost elements.

**3.** The method of claim 1 or 2 wherein the step of processing the wide feature signal includes:

identifying in the wide feature signal the bars and spaces having the wide widths.

**4.** The method of one of claims 1 to 3 wherein the step of processing the wide feature signal includes:

measuring distances between the centers of the wide width bars and spaces in the wide feature signal.

**5.** The method of one of claims 1 to 4 wherein the step of processing the wide feature signal includes:

identifying start and stop characters in the symbol from the identified wide width bars and spaces.

**6.** The method of claim 5 wherein the step of processing the wide feature signal includes:

determining a symbol type from the wide width bars and spaces identified in the wide feature signal.

**7.** The method of claim 6 wherein the step of processing the wide feature signal includes:

determining if the wide feature signal contains an acceleration distortion by comparing the distances between the wide width bars and spaces in the start characters.

**8.** The method of claim 4 wherein the step of processing the wide feature signal includes:

determining a width of the bars or spaces having narrow widths based on the distances between the wide width bars and spaces.

**9.** The method of claim 8 wherein the step of processing the wide feature signal includes:

identifying and locating all single narrow width bars and spaces unresolved in the wide feature signal.

**10.** The method of claim 9 wherein the step of processing the wide feature signal includes:

averaging the distances between the wide width bars and spaces that contain the identified single narrow width bars or spaces.

**11.** The method of claim 4 wherein the step of processing the wide feature signal includes:

identifying the distances between the wide width bars and spaces that contain at least a narrow width bar and a narrow width space from the measured distances in the wide feature signal.

**12.** The method of claim 3 wherein the step of identifying the bars and spaces having the wide widths:

identifying peaks and valleys in the wide feature signals and bounding the peaks and valleys.

**13.** An apparatus (10) for decoding a bar code symbol representing encoded information, the bar code symbol including a plurality of relatively spaced bars having a narrow and a wide width and spaces between the bars having a narrow and a wide width, comprising:

a sensor that receives light reflected from the bar code symbol and produces an output signal therefrom;

**characterized by**:

a receiver that receives the output signal and produces a wide feature signal indicative of the spaces or the bars in the bar code symbol having the wide widths, but failing to be indicative of the spaces or bars in the bar code symbol having the narrow widths; and

a processor for processing the wide feature signal and producing a signal indicative of the full information encoded in the bar code symbol therefrom based on the centers of the bars and spaces having the wide widths.

14. The apparatus (10) of claim 13 wherein the processor identifies in the wide feature signal the bars and spaces having the wide widths.

15. The apparatus (10) of claim 13 or 14 wherein the processor measures distances between the centers of the wide width bars and spaces in the wide feature signal.

16. The apparatus (10) of one of claims 13 to 15 wherein the processor identifies start and stop characters in the symbol from the identified wide width bars and spaces.

17. The apparatus (10) of claim 16 wherein the processor determines a symbol type from the wide width bars and spaces identified in the wide feature signal.

18. The apparatus (10) of claim 15 wherein the processor determines a width of the bars or spaces having narrow widths based on the distances between the wide width bars and spaces.

19. The apparatus (10) of one of claims 13 to 18 wherein the processor creates a lost element matrix that identifies a number of the narrow width bars and spaces between at least one of a wide width bar and space and another of a wide width bar and space in the wide feature signal.

20. The apparatus (10) of claim 19 wherein the processor identifies and locates all single narrow width bars and spaces unresolved in the wide feature signal.

21. The apparatus (10) of claim 20 wherein the processor averages the distances between the wide width bars and spaces that contain the identified single narrow width bars or spaces.

22. The apparatus (10) of claim 15 wherein the processor identifies the distances between the wide width bars and spaces that contain at least a narrow width bar and a narrow width space from the measured distances in the wide feature signal.

**Patentansprüche**

1. Verfahren zum Decodieren eines Streifencode-Symbols, das codierte Informationen darstellt, wobei das Streifencode-Symbol eine Mehrzahl von relativ beabstandeten Streifen besitzt, die eine schmale und eine breite Breite haben, und wobei die Zwischenräume zwischen den Streifen eine schmale und eine breite Breite haben, umfassend:

Aufnehmen von Licht, das von dem Streifencode-Symbol reflektiert ist, und Erzeugen eines Ausgangssignals davon;

**gekennzeichnet durch**:

Aufnehmen des Ausgangssignals und Erzeugen eines Signals eines breiten Merkmals, das die Streifen und Zwischenräume in dem Streifencode-Symbol, das die breiten Breiten besitzt, auflöst, allerdings dahingehend fehlschlägt, die Streifen und Zwischenräume aufzulösen, die die schmalen Breiten haben; und Verarbeiten des Signals des breiten Merkmals und Erzeugen eines Signals, das für die vollen Informationen, codiert in dem Streifencode-Symbol davon, indikativ ist, basierend auf den Mitten der Streifen und Zwischenräume, die die breiten Breiten haben.

2. Verfahren nach Anspruch 1, wobei der Schritt eines Verarbeitens des Signals des breiten Merkmals umfasst:

Erzeugen einer Matrix von verlorenen Elementen in Abhängigkeit des Signals des breiten Merkmals; und

wobei die Erzeugung des Signals, indikativ für die vollen Informationen, auf der Matrix der verlorenen Elemente basierend ist.

3. Verfahren nach Anspruch 1 oder 2, wobei der Schritt eines Verarbeitens des Signals des breiten Merkmals umfasst:

Identifizieren in dem Signal mit breitem Merkmal der Streifen und Zwischenräume, die die breiten Breiten haben.

4. Verfahren nach einem der Ansprüche 1 bis 3, wobei der Schritt eines Verarbeitens des Signals des breiten Merkmals umfasst:

Messen von Abständen zwischen den Mitten der Streifen mit breiter Breite und den Zwischenräumen in dem Signal des breiten Merkmals.

5. Verfahren nach einem der Ansprüche 1 bis 4, wobei der Schritt eines Verarbeitens des Signals des breiten Merkmals umfasst:

Identifizieren von Start- und Stop-Zeichen in dem Symbol von den identifizierten Streifen mit breiter Breite und Zwischenräumen.

6. Verfahren nach Anspruch 5, wobei der Schritt eines Verarbeitens des Signals des breiten Merkmals umfasst:

Bestimmen eines Symbol-Typs von den Streifen mit breiter Breite und den Zwischenräumen, identifiziert in dem Signal des breiten Merkmals.

7. Verfahren nach Anspruch 6, wobei der Schritt eines Verarbeitens des Signals des breiten Merkmals umfasst:

Bestimmen, ob das Signal mit breitem Merkmal eine Beschleunigungs-Verzerrung enthält, durch Vergleichen der Abstände zwischen den Streifen mit breiter Breite und den Zwischenräumen in den Start-Zeichen.

8. Verfahren nach Anspruch 4, wobei der Schritt eines Verarbeitens des Signals des breiten Merkmals umfasst:

Bestimmen einer Breite der Streifen oder Zwischenräume, die schmale Breiten haben, basierend auf den Abständen zwischen den Streifen mit breiter Breite und den Zwischenräumen.

9. Verfahren nach Anspruch 8, wobei der Schritt eines Verarbeitens des Signals mit breitem Merkmal umfasst:

Identifizieren und Zuordnen aller einzelnen Streifen mit schmaler Breite und Zwischenräume, die in dem Signal des breiten Merkmals nicht aufgelöst sind.

10. Verfahren nach Anspruch 9, wobei der Schritt eines Verarbeitens des Signals mit breitem Merkmal umfasst:

Mitteln der Abstände zwischen den Streifen mit breiter Breite und den Zwischenräumen, die die identifizierten, einzelnen Streifen mit schmaler Breite oder Zwischenräume enthalten.

11. Verfahren nach Anspruch 4, wobei der Schritt eines Verarbeitens des Signals des breiten Merkmals umfasst:

Identifizieren der Abstände zwischen den Streifen mit breiter Breite und den Zwischenräumen, die mindestens einen Streifen mit schmaler Breite und einen Zwischenraum mit schmaler Breite enthalten, von den gemessenen Abständen in dem Signal des breiten Merkmals.

12. Verfahren nach Anspruch 3, wobei der Schritt eines Identifizierens der Streifen und Zwischenräume, die die breiten Breiten haben,

Peaks und Täler in den Signalen des breitem Merkmals identifiziert und die Peaks und Täler begrenzt.

13. Vorrichtung (10) zum Decodieren eines Streifencode-Symbols, das codierte Informationen darstellt, wobei das Streifencode-Symbol eine Mehrzahl von relativ zueinander beabstandeten Streifen, die eine schmale und eine breite Breite haben, und Zwischenräume zwischen den Streifen, die eine schmale und eine breite Breite haben, besitzt, das aufweist:

einen Sensor, der Licht, reflektiert von dem Streifencode-Symbol, aufnimmt und ein Ausgangssignal davon erzeugt;

**gekennzeichnet durch**:

einen Empfänger, der das Ausgangssignal empfängt und ein Signal eines breiten Merkmals erzeugt, das für die Zwischenräume oder die Streifen in dem Streifencode-Symbol indikativ ist, das die breiten Breiten hat, allerdings dahingehend fehlschlägt, für die Zwischenräume oder Streifen in dem Streifencode-Symbol indikativ zu sein, das die schmalen Breiten hat; und

einen Prozessor zum Verarbeiten des Signals des breiten Merkmals und zum Erzeugen eines Signals, das für die vollen Informationen indikativ ist, die in dem Streifencode-Symbol codiert sind, davon basierend auf den Mitten der Streifen und der Zwischenräume, die die breiten Breiten haben.

14. Vorrichtung (10) nach Anspruch 13, wobei der Prozessor in dem Signal des breiten Merkmals die Streifen und Zwischenräume identifiziert, die die breite Breiten haben.

15. Vorrichtung (10) nach Anspruch 13 oder 14, wobei der Prozessor Abstände zwischen den Mitten der Streifen mit breiter Breite und den Zwischenräumen in dem Signal mit breitem Merkmal misst.

16. Vorrichtung (10) nach einem der Ansprüche 13 bis 15, wobei der Prozessor Startund Stop-Zeichen in dem Symbol von den identifizierten Streifen mit breiter Breite und den Zwischenräumen identifiziert.

17. Vorrichtung (10) nach Anspruch 16, wobei der Prozessor einen Symbol-Typ von den Streifen mit breiter Breite und den Zwischenräumen, identifiziert in dem Signal mit breitem Merkmal, bestimmt.

18. Vorrichtung (10) nach Anspruch 15, wobei der Prozessor eine Breite der Streifen oder Zwischenräume bestimmt, die schmale Breiten haben, basierend auf den Abständen zwischen den Streifen mit breiter Breite und den Zwischenräumen.

19. Vorrichtung (10) nach einem der Ansprüche 13 bis 18, wobei der Prozessor eine Verlusst-Element-Matrix erzeugt, die eine Anzahl von Streifen mit schmaler Breite und der Zwischenräume zwischen mindestens einem Streifen mit breiter Breite und dem Zwischenraum und einem anderen Streifen mit breiter Breite und dem Zwischenraum in dem Signal mit breitem Merkmal identifiziert.

20. Vorrichtung (10) nach Anspruch 19, wobei der Prozessor alle einzelnen Streifen mit schmaler Breite und Zwischenräume identifiziert und lokalisiert, die in dem Signal mit breitem Merkmal nicht aufgelöst sind.

21. Vorrichtung (10) nach Anspruch 20, wobei der Prozessor die Abstände zwischen den Streifen mit breiter Breite und den Zwischenräumen mittelt, die die identifizierten, einzelnen Streifen mit schmaler Breite oder Zwischenräume enthalten.

22. Vorrichtung (10) nach Anspruch 15, wobei der Prozessor die Abstände zwischen den Streifen mit breiter Breite und den Zwischenräumen identifiziert, die mindestens einen Streifen mit schmaler Breite und einen Zwischenraum mit schmaler Breite enthalten, von den gemessenen Abständen in dem Signal des breiten Merkmals.

## Revendications

1. Procédé pour décoder un symbole de code à barres représentant une information codée, le symbole de code à barres incluant une pluralité de barres relativement espacées dont les largeurs sont petites et grandes, et d'espaces entre les barres dont les largeurs sont petites et grandes, comprenant les étapes consistant à :

recevoir la lumière qui est réfléchie du symbole de code à barres et produire un signal de sortie à partir de celle-ci;

**caractérisé par** les étapes consistant à :

recevoir le signal de sortie et produire un signal de caractéristique large résolvant les barres et les espaces dans le symbole de code à barres dont les largeurs sont grandes, mais ne réussissant pas à résoudre les barres et les espaces dont les largeurs sont petites; et

traiter le signal de caractéristique large et produire un signal indicatif de toute l'information codée dans le symbole de code à barres à partir de celui-ci sur la base des centres des barres et des espaces dont les largeurs sont grandes.

2. Procédé selon la revendication 1, dans lequel l'étape de traitement du signal de caractéristique large inclut l'étape consistant à :

générer une matrice d'éléments perdus en réponse au signal de caractéristique large; et dans lequel ladite étape de production du signal indicatif de toute l'information est basée sur la matrice des éléments perdus.

3. Procédé selon la revendication 1 ou 2, dans lequel l'étape de traitement du signal de caractéristique large inclut l'étape consistant à :

identifier dans le signal de caractéristique large les barres et les espaces dont les largeurs sont grandes.

4. Procédé selon l'une des revendications 1 à 3, dans lequel l'étape de traitement du signal de caractéristique large inclut l'étape consistant à :

mesurer les distances entre les centres des barres et des espaces de grande largeur dans le signal de caractéristique large.

5. Procédé selon l'une des revendications 1 à 4, dans lequel l'étape de traitement du signal de caractéristique large inclut l'étape consistant à :

identifier les caractères de démarrage et d'arrêt dans le symbole à partir des barres et des espaces de grande largeur identifiés.

6. Procédé selon la revendication 5, dans lequel l'étape de traitement du signal de caractéristique large inclut l'étape consistant à :

déterminer un type de symbole à partir des barres et des espaces de grande largeur identifiés dans le signal de caractéristique large.

7. Procédé selon la revendication 6, dans lequel l'étape de traitement du signal de caractéristique large inclut l'étape consistant à :

déterminer si le signal de caractéristique large contient une distorsion d'accélération en comparant les distances entre les barres et les espaces de grande largeur dans les caractères de démarrage.

8. Procédé selon la revendication 4, dans lequel l'étape de traitement du signal de caractéristique large inclut l'étape consistant à :

déterminer une largeur des barres ou des espaces dont les largeurs sont petites sur la base des distances entre les barres et les espaces de grande largeur.

9. Procédé selon la revendication 8, dans lequel l'étape de traitement du signal de caractéristique large inclut l'étape consistant à :

identifier et positionner toutes les barres et tous les espaces de petite largeur isolés non résolus dans le signal de caractéristique large.

10. Procédé selon la revendication 9, dans lequel l'étape de traitement du signal de caractéristique large inclut l'étape consistant à :

> calculer la moyenne des distances entre les barres et les espaces de grande largeur qui contiennent les barres ou les espaces de petite largeur isolés identifiés.

11. Procédé selon la revendication 4, dans lequel l'étape de traitement du signal de caractéristique large inclut l'étape consistant à :

> identifier les distances entre les barres et les espaces de grande largeur qui contiennent au moins une barre de petite largeur et un espace de petite largeur à partir des distances mesurées dans le signal de caractéristique large.

12. Procédé selon la revendication 3, dans lequel l'étape d'identification des barres et des espaces dont les largeurs sont grandes inclut l'étape consistant à :

> identifier des sommets et des creux dans les signaux de caractéristique large et borner les sommets et les creux.

13. Appareil (10) pour décoder un symbole de code à barres représentant une information codée, le symbole de code à barres incluant une pluralité de barres relativement espacées dont les largeurs sont petites et grandes et des espaces entre les barres dont les largeurs sont petites et grandes, comprenant :

> un capteur qui reçoit la lumière réfléchie du symbole de code à barres et produit un signal de sortie à partir de celle-ci;

> **caractérisé par** :

> un récepteur qui reçoit le signal de sortie et produit un signal de caractéristique large indicatif des espaces ou des barres dans le symbole de code à barres dont les largeurs sont grandes, mais n'étant pas indicatif des espaces ou des barres dans le symbole de code à barres dont les largeurs sont petites; et
> un processeur pour traiter le signal de caractéristique large et produire un signal indicatif de toute l'information codée dans le symbole de code à barres à partir de celui-ci sur la base des centres des barres et des espaces dont les largeurs sont grandes.

14. Appareil (10) selon la revendication 13, dans lequel le processeur identifie dans le signal de caractéristique large les barres et les espaces dont les largeurs sont grandes.

15. Appareil (10) selon la revendication 13 ou 14, dans lequel le processeur mesure les distances entre les centres des barres et des espaces de grande largeur dans le signal de caractéristique large.

16. Appareil (10) selon l'une des revendications 13 à 15, dans lequel le processeur identifie les caractères de démarrage et d'arrêt dans le symbole à partir des barres et des espaces de grande largeur identifiés.

17. Appareil (10) selon la revendication 16, dans lequel le processeur détermine un type de symbole à partir des barres et des espaces de grande largeur identifiés dans le signal de caractéristique large.

18. Appareil (10) selon la revendication 15, dans lequel le processeur détermine une largeur des barres ou des espaces dont les largeurs sont petites sur la base des distances entre les barres et les espaces de grande largeur.

19. Appareil (10) selon l'une des revendications 13 à 18, dans lequel le processeur crée une matrice d'éléments perdus qui identifie un nombre des barres et des espaces de petite largeur entre au moins l'un parmi une barre et un espace de grande largeur et un autre d'une barre et d'un espace de grande largeur dans le signal de caractéristique large.

20. Appareil (10) selon la revendication 19, dans lequel le processeur identifie et positionne toutes les barres et tous les espaces de petite largeur isolés non résolus dans le signal de caractéristique large.

**21.** Appareil (10) selon la revendication 20, dans lequel le processeur calcule la moyenne des distances entre les barres et les espaces de grande largeur qui contiennent les barres et les espaces de petite largeur isolés identifiés.

**22.** Appareil (10) selon la revendication 15, dans lequel le processeur identifie les distances entre les barres et les espaces de grande largeur qui contiennent au moins une barre de petite largeur et un espace de petite largeur à partir des distances mesurées dans le signal de caractéristique large.

FIG.1

FIG.2

FIG. 3

FIG. 4

FIG. 5

FIG. 6

WIDE ELEM. TYPE —— S BB B S B SB BB SB B S B B S B BSB B SB BSB S BB
CENTERS SEPERATION 15 12 19 16 21 22 10 19 12 16 10 26 15 16 19 15 22 18 9 4 25 14 9 31 9 9 26 16 12

FIG. 7

MISSING NAR. ELEM. —— 2 1 2 0 1 2 0 2 2 2 0 0 2 0 0 0 2 1
WIDE ELEM. TYPE —— S BB B S B SB BB SB B S B B S B BSB B SB BSB S BB
CENTERS SEPERATION 15 12 19 16 21 22 10 19 12 16 10 26 15 16 19 15 22 18 9 4 25 14 9 31 9 9 26 16 12

FIG. 8

| MISSING NAR. ELEM. | 2 1 3 2 4 4 0 3 1 2 0 2 2 3 2 4 3 0 0 2 0 0 0 0 1 |
| WIDE ELEM. TYPE | S BB B S B SB BB SB B S B B S B BSB B SB BSB S BB |
| CENTERS SEPERATION | 15 12 19 16 21 22 10 19 12 16 10 26 15 16 19 15 22 18 9 4 25 14 9 31 9 9 26 16 12 |

FIG. 9

| MISSING NAR. ELEM. | 2 1 3 2 4 4 0 3 1 2 0 5 2 2 3 2 4 3 0 0 5 2 0 7 0 0 6 1 7 12 |
| WIDE ELEM. TYPE | S BB B S B SB BB SB B S B B S B BSB B SB BSB S BB |
| CENTERS SEPERATION | 15 12 19 16 21 22 10 19 12 16 10 26 15 16 19 15 22 18 9 4 25 14 9 31 9 9 26 16 12 |

FIG. 10

2 1 3 2 4 4 0 3 1 20 5 2 2 3 2 4 300 5 20 7 00 6 2 1

* 1 4 5 8 1 6 5 6 *

FIG. 11

FIG. 12

FIG. 13

EP 0 734 557 B1

FIG. 14

FIG. 15

FIG. 16

FIG. 17

EP 0 734 557 B1

FIG. 18

FIG. 19

EP 0 734 557 B1

FIG. 20

34

FIG. 21

FIG. 22

FIG. 23

FIG. 24

EP 0 734 557 B1

FIG. 25

FIG. 26

FIG. 27